# EUROPEAN PATENT SPECIFICATION

(11) **EP 3 296 384 B1**
(45) Date of publication and mention of the grant of the patent: **13.01.2021**
(21) Application number: 16792751.6
(22) Date of filing: 12.05.2016
(51) Int. Cl.: A23L 2/38, A23L 2/39, A23L 2/52, A23L 2/54, A23L 2/56, A23L 2/60, A23L 2/66, A23L 2/68, C12C 3/10, C12C 11/00, A23L 2/40, A23F 3/40, C12C 3/00, C12C 7/20, B01D 11/02

(54) **HOP EXTRACT AND METHOD FOR PRODUCING SAME**
HOPFENEXTRAKT UND VERFAHREN ZUR HERSTELLUNG DAVON
EXTRAIT DE HOUBLON ET SON PROCÉDÉ DE PRODUCTION

(30) Priority: 12.05.2015 JP 2015097336
(43) Date of publication of application: 21.03.2018
(73) Proprietor: Suntory Holdings Limited, Osaka-shi, Osaka 530-8203 (JP)
(72) Inventor: KATONO, Fuminori, Soraku-gun Kyoto 619-0284 (JP); YONEZAWA, Daisaku, Soraku-gun Kyoto 619-0284 (JP); INUI, Takako, Mishima-gun Osaka 618-0001 (JP)
(74) Representative: Vossius & Partner Patentanwälte Rechtsanwälte mbB
(86) International application number: PCT/JP2016/064176
(87) International publication number: WO 2016/182026

(56) References cited:
- EP-A1- 2 980 199
- WO-A1-2010/079778
- CA-A- 987 250
- GB-A- 1 388 581
- JP-A- H06 240 288
- JP-A- S57 187 019
- JP-A- S57 194 760
- JP-A- 2008 214 261
- JP-A- 2014 187 969
- JP-A- 2014 525 257
- US-A- 4 104 409
- US-A1- 2002 031 594
- NARZISS, L. ET AL.: 'Ueber den Einfluss technologischer Massnahmen auf das Hopfenaroma im Bier' MONATSSCHRIFT FUER BRAUWISSENSCHAFT vol. 43, no. 11, 1990, pages 365 - 371, XP009507565

## Description

### TECHNICAL FIELD

The present invention relates to a hop extract and a method for producing the same. More specifically, this invention relates to a method for obtaining a linalool-rich extract from hops using supercritical carbon dioxide, as well as to said linalool-rich hop extract. The invention is defined by the claims.

### BACKGROUND ART

Hops, one of main ingredients of beer, are capable of imparting unique fragrance and refreshing bitterness to bear. In the process of beer production, hops are commonly used after being boiled with wort prior to a fermentation step. When hops are boiled with wort, essential oil components imparting fragrance and bitterness components imparting refreshing bitterness are extracted from hops into wort, and then the extracted components undergo a pyrolysis reaction and a thermal isomerization reaction to yield wort with unique fragrance and bitterness.

Fresh hops just picked are easily rotten and very difficult to store, and are therefore commonly dried immediately after harvest. Dry hops used in beer production are provided in various forms, including dry, whole-shaped hops which remain their original shape, pulverized hop powder, and hop pellets obtained by molding into a pellet shape. Dry hops are subject to deterioration by chemical reaction under conditions of high temperature and humidity or high oxygen concentration, and a product generated by deterioration may cause a beer to take on deterioration odor or *zatsumi* (strange and unpleasant taste). Thus, delicate control of temperature, humidity and oxygen concentration is required for storage of hops.

Also, there is adopted an approach in which useful components extracted from hops are stored in the form of a hop extract. The hop extract is advantageous because the extract is easy to handle and is concentrated thereby saving the space required for storage. Exemplary methods for extracting useful components from hops include extraction with an organic solvent and extraction with supercritical carbon dioxide. Among them, extraction with an organic solvent has some problems because not only useful components but also tannin, fat, wax, and pigment components such as chlorophyll are extracted, thereby giving a bad tone or *zatsumi* to beer products. Also, caution should be taken against remaining of an extraction solvent harmful to the human body, or deterioration or loss of an extract due to considerable heating for distilling away an extraction solvent. In contrast, extraction with supercritical carbon dioxide is an effective method capable of efficiently extracting useful components from natural products without causing any problem with a residual solvent.

Hop components required for beer are roughly classified into components imparting refreshing bitterness, typified by α-acids, and essential oil components imparting a unique fragrance. In the process of common beer production, it is not preferable to impart excessive bitterness to a beer, and so the amount of hops used is controlled on the basis of bitterness components. For example, it is common practice to measure the content of α-acids in hops and add hops to wort in a sufficient amount to ensure that a desired amount of α-acids are added. In order to produce a beer with enhanced hop fragrance, an attempt is made to increase the amount of hops to be used. However, as the amount of hops is increased, the amount of bitterness components also increases at the same time, so that no favorable beer can be produced because of too strong bitterness. To solve such a problem, the present applicant suggested a method for obtaining a hop extract specifically rich in essential oil components using extraction with supercritical carbon dioxide. To be specific, (1) essential oil components are extracted while the pressure of carbon dioxide in an extraction tank is adjusted to be in the range of 80 to 100 kg/cm², and an essential oil extract is separated in a separation tank at a pressure lower than the extraction pressure; or (2) both essential oil components and bitterness components are extracted together at a pressure of higher than 100 kg/cm², and bitterness components are separated in a first separation tank at a pressure that is lower than the extraction pressure but not lower than 100 kg/cm², and subsequently an essential oil extract is separated in a second separation tank at a pressure of lower than 100 kg/cm². Adopting such a method makes it possible to obtain a hop extract containing essential oil components at a high ratio relative to α-acids (PTL 1).

### CITATION LIST

### PATENT LITERATURE

PTL 1: Japanese Patent Application Publication No. JP H06-240288 PTL 2: US 2002/0031594 A1

### SUMMARY OF INVENTION

### TECHNICAL PROBLEM

According to the method disclosed in PTL 1, a hop extract containing essential oil components at a high ratio relative to α-acids can be produced, and by using the thus-produced hop extract, hop fragrance can be imparted to beer products without causing them to taste too bitter. However, essential oil components include components imparting a favorable fragrance to beers and components with no such effect; therefore, it is preferred to provide an extract containing a larger amount of components imparting a favorable fragrance. PTL 2 discloses the extraction of hop extracts with supercritical carbon dioxide. With a focus being placed on linalool among essential oil components in order to provide a hop extract that helps produce beer products with a superior fragrance, the present invention has as its object to provide a method for obtaining linalool from hops at a high recovery rate using extraction with supercritical carbon dioxide, in particular, a method for significantly increasing the ratio of linalool relative to α-acids (bitterness components) in a hop extract as compared to conventional hop extracts. Another object of this invention is to provide a hop extract containing linalool in a high proportion.

### SOLUTION TO PROBLEM

Essential oil components (fragrance components) from hops contain a fragrance like fresh green leaves, as typified by hexanal and hexenal, a citrus-like fragrance derived from esters, a fragrance reminiscent of flowers or fruits, as typically derived from linalool or geraniol, and other fragrances. Among them, linalool is known as a key component characterizing a favorable hop fragrance and also as a component serving as an appropriate index to a hop fragrance present in beers. The present inventors, particularly focusing on linalool among those essential oil components characterizing a hop fragrance, have made intensive studies on a method for producing a hop extract having a significantly increased ratio of linalool to α-acids by recovering linalool at a higher recovery rate. As a result, the inventors found that in the process of production of a hop extract using supercritical carbon dioxide, the recovery rate of linalool can be increased by adjusting the temperature of a separation tank to not higher than 30°C. The inventors also found that in this process, the ratio of linalool to α-acids in a hop extract obtained can be increased by adjusting the pressure of carbon dioxide in an extraction tank to be in the range of 8 to 10 MPa, and that in this case, such problems as clogging of piping are difficult to occur because the extract can flow smoothly in spite of the low temperature of the separation tank.

More specifically, the present: invention is defined by the appended claims 1 to 15. Independent claim 1 is directed to method for producing a hop extract using supercritical carbon dioxide as an extraction solvent, the method comprising bringing carbon dioxide in a supercritical state in contact with a hop ingredient, which has been charged in an extraction tank, thus obtaining carbon dioxide containing a hop extract, wherein the pressure of carbon dioxide in the extraction tank is adjusted to be in the range of 8 to 10 MPa, directing the carbon dioxide containing the hop extract to a separation tank, and reducing the pressure to separate the extract from the carbon dioxide, wherein the temperature of the separation tank is adjusted to not higher than 20°C, and recovering and circulating the separated carbon dioxide to the extraction tank. Independent claim 10 is directed to a hop extract having a ratio of the amount of linalool (in mg) to that of α-acids (in g), which is not lower than 31.0.

Examples that do not fall within the scope of these claims are not according to the invention.

### ADVANTAGEOUS EFFECTS OF INVENTION

The present invention is characterized by adjusting the temperature of a separation tank to not higher than 20 °C and also adjusting the pressure of carbon dioxide upon extraction to be in the range of 8 to 10 MPa, whereby the ratio of linalool to α-acids can be increased by controlling the recovery rate of α-acids from hops while maintaining the recovery rate of linalool from hops above a certain level. Among essential oil components from hops, linalool is known as a component of an index to a favorable hop flower or fruit-like fragrance present in beers. For the purpose of production of beer products with a high fragrance, it is advantageous that linalool can be recovered at a high recovery rate. In a common extraction method in which not only essential oil components but also bitterness components (a-acids) are extracted from hops in large amounts, the viscosity of an extract increases significantly at low temperatures, resulting in a substantial decrease in liquid circulation efficiency, thereby making it difficult to flow an extract through piping; therefore, it is necessary to use an extract while it is warmed up to at least about 40 to 50°C (refer to Hopsteiner - Newsletter, April 2011, Technical Support, Hopsteiner). In contrast, the extract obtained according to this invention has a low content of α-acids and can thus maintain its relatively good flowability even at low temperatures, so that a low temperature, e.g. not higher than 30°C, can be adopted in a separation tank.

The hop extract obtained according to the present invention not only contains lots of linalool, a component of an index to a favorable hop fragrance, but also contains components unique to hops, such as small amounts of α-acids, and hop essential oil components such as terpineol, citral, β-caryophyllene, α-humulene and myrcene. For example, as compared to a synthetic linalool flavorant, the hop extract of this invention can make one more strongly perceive the complexity typical of natural hops, and is more suitable for use as an alternative to hops. The inventive extract can be advantageously used as an alternative to part or all of common hops in the process of production of foods and beverages using hops. Such foods and beverages can be exemplified by effervescent beverages, including alcoholic or non-alcoholic beer-taste beverages.

### DESCRIPTION OF EMBODIMENTS

### <Hops>

Hops are a climbing perennial herb of the family *Cannabaceae.* In the present invention, the cones of unpollinated female hop plants are subjected to extraction with supercritical carbon dioxide. Hops generally contain not only resins such as α-acids and β-acids, but also aroma components such as linalool, terpineol, citral, β-caryophyllene, α-humulene, and myrcene, and the amounts of these components present in hops vary with the variety of hops. The variety of hops that can be used in this invention is not particularly limited and can be selected as appropriate depending on the purpose. In particular, it is preferred to use, as an ingredient, hops of a variety with a high linalool concentration, since there is a tendency that an extract with a higher linalool concentration can be obtained from such a variety of hops. Examples of such hops include hops containing linalool at a concentration of higher than 5.0 mg/100 g at the stage before extraction. Specific examples of the variety of such hops include Tradition, Nugget, Citra, and Amarillo varieties. Hops with a linalool concentration of not lower than 10.0 mg/100 g are more preferred and specifically exemplified by hops of the Nugget variety. The extraction method of this invention can increase the percentage of linalool extracted even in the case of using any varieties of hops, as compared to conventional methods; therefore, hops with a linalool concentration of not higher than 5.0 mg/100 g can also be used as an ingredient. Examples of such varieties of hops include Saaz, Magnum, Nelson Sauvin, Cascade, Chinook, Simcoe, Apollo, Bravo, Mosaic, Pallsade, and Willamette varieties. The concentration of linalool may also be not higher than 3.0 mg/100 g.

The form of hops used for extraction is not particularly limited, and any of the following forms can be adopted: fresh hops just picked, whole-shaped hops obtained by drying fresh hops, pulverized hop powder, hop pellets obtained by molding into a pellet shape, and the like. From the viewpoint of extraction efficiency, it is preferred to use pulverized hops. Additionally, it should be noted that hops subjected to extraction may also be hereinafter referred to as "hop ingredient".

### <Extraction with supercritical carbon dioxide>

Carbon dioxide is incombustible, harmless and inexpensive, and has a critical temperature and pressure of 31.1 °C and 7.38 MPa, thus being easy to handle in a supercritical state. A fluid in a supercritical state, which has a density close to that of liquid and a high coefficient of diffusion close to that of gas, is capable of quickly extracting various types of compounds in large amounts and high yield. Also, the use of carbon dioxide makes it possible to separate an extract from an extraction solvent by slight change in pressure and temperature. Other advantages characteristic of carbon dioxide are that it can be expected to exert bacteriostatic or bactericidal activity, is harmless and hygienic to the human body, and is particularly suitable for use in food and pharmaceutical products.

According to a common procedure for extraction with supercritical carbon dioxide, carbon dioxide put into a supercritical state is brought into contact with a feed to be subjected to extraction, which has been charged in an extraction tank, whereby an object of interest is extracted from the feed to be subject to extraction into carbon dioxide. Then, in a separation tank, the density of carbon dioxide in a supercritical state is lowered to reduce its ability as a solvent by, for example, decreasing the pressure or increasing the temperature of carbon dioxide, whereby the object of interest (extract) is separated from the solvent.

In the present invention, the pressure of carbon dioxide in an extraction tank used for extraction with supercritical carbon dioxide is set to be in the range of 8 to 10 MPa. When the pressure is lower than the above range, it is difficult to maintain a supercritical state in a stable manner. When the pressure is higher than the above range, other components than linalool, particularly α-acids, are extracted in larger amounts, resulting in a relative decrease in the percentage of linalool extracted. Further, the viscosity of the extract increases particularly at low temperatures, resulting in a substantial decrease in liquid circulation efficiency, thereby making it difficult to adopt a low temperature of not higher than 30°C particularly in the latter separation tank. The temperature of carbon dioxide in the extraction tank is preferably in the range of 40 to 60°C. When the temperature is in this range, the solvent density becomes suitable for extraction of linalool. In this case, the supercritical carbon dioxide density is considered to be approximately in the range of 0.2 to 0.6 g/mL.

Next, carbon dioxide containing the extract is directed to the separation tank, where the pressure is reduced to separate the extract from carbon dioxide. In the present invention, the temperature of the separation tank is adjusted to not higher than 20°C. The present inventors found that when the separation tank is at low temperatures, i.e. not higher than 20 °C, the extraction rate of linalool increases, resulting particularly in an increase in the ratio of linalool to α-acids. The adjustment of the temperature of the separation tank can be achieved by, for example, circulating cooling or warm water around the outer surface of the separation tank. The pressure of the separation tank is not particularly limited as long as it is at such a level that allows separation of the extract from carbon dioxide. For example, the pressure approximate to the atmospheric pressure (0.1 MPa), and the pressure of approximately 4 to 6 MPa, are commonly used in a single-pass method and a circulation method, respectively. The pressure of the separation tank may be increased up to about 8 MPa as appropriate. According to the invention, only the circulation method is used.

As described above in the section titled "ADVANTAGEOUS EFFECTS OF INVENTION", hop extracts containing lots of α-acids as obtained by conventional extraction methods significantly increase in viscosity and thereby become difficult to flow through piping, when the temperature is lowered; therefore, it is necessary to warm hop extracts up to at least about 40 to 45°C (refer to Hopsteiner - Newsletter, April 2011, Technical Support, Hopsteiner). Accordingly, in the case of using a conventional extraction method (in which lots of α-acids are extracted), it was not common for those skilled in the art to adjust the temperature of a separation tank to not higher than 30°C, since it is more likely that there may arise problems such as a significant decrease in liquid circulation efficiency and clogging of piping. The present inventors found that when the amount of α-acids extracted is reduced by adjusting the pressure of carbon dioxide in an extraction tank to the specified level of 8 to 10 MPa, the resulting extract does not significantly increase in viscosity even at low temperatures, and thus a practical level of liquid circulation efficiency can be maintained even in the case of adopting a lower separation temperature than the conventionally used one, such as not higher than 30°C. Namely, in the present invention, it is important not only that the temperature of a separation tank be adjusted to not higher than 30°C for the purpose of increasing the recovery rate of linalool, but also that the amount of α-acids extracted from hops be reduced by adjusting the pressure of carbon dioxide in an extraction tank to be in the range of 8 to 10 MPa. It is only by following both of the above procedures that a high recovery rate of linalool and a high ratio of linalool to α-acids can be achieved in this invention.

In general, examples of extraction methods with supercritical carbon dioxide include a single-pass method in which separated carbon dioxide is discharged, and a circulation method in which separated carbon dioxide is recovered and circulated again to an extraction tank. In the present invention, only the circulation method is used, in which there is a tendency that the ratio of linalool to α-acids can be significantly increased under the conditions of extraction pressure and separation temperature as defined in this invention; therefore, the circulation method may well be said to be more suitable for this invention.

### <Hop extract>

According to the extraction method of the present invention, linalool can be efficiently extracted from hops while the amount of α-acids extracted can be reduced, so that the ratio of the amount of linalool to that of α-acids ("linalool/a-acids ratio") in an extract can be significantly increased as compared to that ratio in a hop ingredient not subjected to an extraction step. For example, in the case where hops of a variety with a relatively high linalool concentration (*i.e.,* a variety with a linalool concentration of higher than 5.0 mg/100 g) are used as an ingredient, the ratio of the amount of linalool (in mg) to that of α-acids (in g) in an extract can be increased by 20 times that ratio in a hop ingredient not subjected to extraction. Examples of a hop variety with a linalool concentration of higher than 5.0 mg/100 g include Tradition, Nugget, Citra, and Amarillo varieties. In the case where hops of a variety with a much higher linalool concentration (*i.e.,* a variety with a linalool concentration of not lower than 10 mg/100 g, *e.g.,* Nugget variety) are used as an ingredient, the linalool/α-acids ratio in an extract can be increased by 30 times that ratio in a hop ingredient. Even in the case where hops of a variety with a relatively low linalool concentration (*i.e.,* a variety with a linalool concentration of not higher than 5.0 mg/100 g) are used as an ingredient, the linalool/α-acids ratio in an extract can be increased by 5.5 times or more that ratio in a hop ingredient -- such a high ratio cannot be achieved by conventional methods. Examples of a hop variety with a linalool concentration of not higher than 5.0 mg/100 g include Saaz, Magnum, Nelson Sauvin, Cascade, Chinook, Apollo, Bravo, Mosaic, Pallsade, and Willamette varieties.

The "ratio of the amount of linalool (in mg) to that of α-acids (in g)" refers to a value obtained by dividing the amount of linalool (a value expressed in mg) by that of α-acids (a value expressed in g). For example, when the amount of linalool is 10 mg and that of α-acids is 1 g, this ratio is calculated to be 10. In this connection, for example, when that ratio in a hop ingredient not subjected to extraction is 1 and that ratio in an extract is 10, it follows that the ratio in an extract is 10 times higher than that in a hop ingredient.

In the present invention, in the case where hops of a variety with a relatively high linalool concentration (*i.e.,* a variety with a linalool concentration of higher than 5.0 mg/100 g) are used as an ingredient, the extract provided can contain a high percentage of linalool, *i.e.,* can have a ratio of the amount of linalool (in mg) to that of α-acids (in g) which is not lower than 31.0. This ratio is preferably not lower than 35.0.

Also, in the present invention, since even in the case of using hops of any varieties, the percentage of linalool extracted can be increased as compared to extracts obtained by conventional methods, hops of a variety with a relatively low linalool concentration (*i.e.,* a variety with a linalool concentration of not higher than 5.0 mg/100 g) may be used as an ingredient -- in such a case, the extract obtained can have a ratio of the amount of linalool (in mg) to that of α-acids (in g) which is not lower than 3.7. Such a value cannot be achieved by conventional methods in the case of using hops of a variety with a low linalool concentration as an ingredient.

The extract of the present invention can have a high linalool concentration and a low concentration of α-acids. Depending on the variety of hops used as an ingredient, the extract obtained can have a linalool concentration of not lower than 440.0 mg/100 g and a concentration of α-acids of not higher than 13.0 g/100 g. When hops with a linalool concentration of higher than 5.0 mg/100 g and lower than 10.0 mg/100 g (*e.g.,* hops of the Tradition or Citra variety) are used as an ingredient, the extract obtained can have a linalool concentration of not higher than 310.0 mg/100 g and a concentration of α-acids of not lower than 10.0 g/100 g. When hops with a linalool concentration of not higher than 5.0 mg/100 g (*e.g.,* hops of the Saaz, Magnum, Nelson Sauvin, Cascade, Chinook, Apollo, Bravo, Mosaic, Palisade or Willamette variety) are used as an ingredient, the extract obtained can have a linalool concentration of not lower than 40.0 mg/100 g and a concentration of α-acids of not higher than 12.0 g/100 g.

Alpha-acids are components responsible for the bitterness of hops. In the process of beer production, α-acids extracted from hops into wort isomerize into water-soluble bitterness components, *i*.*e*. iso-α-acids, due to heat generated by boiling, whereby bitterness is imparted to beer. In the present invention, the amount of α-acids is measured by the method described below in the section titled "EXAMPLES".

Linalool (with the molecular formula C₁₀H₁₈O) is a colorless liquid at room temperature with a boiling point of about 198°C, and is a component with a fragrance like lily-of-the-valley or bergamot. Linalool is known as a component of an index to a favorable hop fragrance (MBAA Global Emerging Issues, November 2009). In the present invention, the amount of linalool is measured by the method described below in the section titled "EXAMPLES".

The extract of the present invention is characterized by having a high recovery rate of linalool. In a preferred embodiment of this invention, the amount of linalool in an obtained extract is not lower than 33 mass% of that in a hop ingredient not subjected to an extraction step (*i.e*., the recovery rate of linalool is not lower than 33 mass%). Depending on the variety of hops, the recovery rate of linalool may be not lower than 40 mass%. In particular, there is a tendency that the recovery rate of linalool becomes higher when using hops of a variety with a relatively high linalool concentration (*e*.*g*., hops of a variety with a linalool concentration of higher than 5.0 mg/100 g).

Also, in the present invention, the recovery rate of α-acids is relatively low. Preferably, the amount of α-acids in an obtained extract is not higher than 10 mass%, more preferably not higher than 7 mass%, of that in a hop ingredient not subjected to an extraction step. Depending on the variety of hops, this value (*i.e*., the recovery rate of α-acids) may be not higher than 3 mass%. In particular, there is a tendency that the recovery of α-acids becomes lower when using hops of a variety with a relatively high linalool concentration (e.g., hops of a variety with a linalool concentration of higher than 5.0 mg/100 g).

The extract of the present invention is a mixture containing not only α-acids and linalool as described above but also other different components present in hops and soluble in supercritical carbon dioxide, and is obviously different from a mere mixture of α-acids and linalool. The extract of this invention can contain various components present in hops, including, but not limited to, terpineol, citral, β-caryophyllene, α-humulene, and myrcene. Unlike linalool obtained synthetically or extracted from natural products other than hops, the extract of this invention contains not only linalool but also other components derived from hops, and thus has the complexity typical of a natural product source and hop-like qualities. The extract of this invention can be advantageously used as an alternative to part or all of common hops in the process of production of foods and beverages characterized by a hop fragrance with the use of hops.

### <Method for producing a food or beverage>

As described above, the hop extract of the present invention has the complexity typical of a natural product source and hop-like qualities, and thus can be advantageously used as an alternative to part or all of common hops in the process of production of foods and beverages characterized by a hop fragrance. The types of foods and beverages to be produced are not particularly limited. Hops are known to have a sound sleep-inducing effect, a sedative effect, a stomachic effect, and other effects, and have attracted attention as an ingredient for health foods in recent years. For example, in the process of production of health foods with the use of hops, the hop extract of the invention can be added as part of hop components, for the purpose of enhancing a favorable hop fragrance while maintaining hop-like qualities. The inventive hop extract can be particularly advantageously used in the production of effervescent beverages, which are a representative of foods and beverages made with hops. The inventive hop extract is characterized by containing a lower percentage of bitterness components (a-acids) and a higher percentage of a favorable fragrance component (linalool) as compared to a hop ingredient not subjected to extraction; therefore, when the inventive hop extract is used as an alternative to part or all of common hops in the process of production of effervescent beverages, a favorable hop fragrance can be imparted to the beverages without excessively enhancing the bitterness of hops. As referred to above, the "effervescent beverages" refers to beverages having effervescence of carbon dioxide gas, and includes alcoholic and non-alcoholic beverages. The extract of this invention can be used by adding it to beverages at any of the steps in the process of production of effervescent beverages.

Beer-taste beverages with a beer-like flavor are one of particularly preferred modes of effervescent beverages. Hops are known as one of main ingredients giving a beer-like flavor to beverages. The highly fragrant hop extract of the present invention is particularly suitable for imparting a favorable hop fragrance to beer-taste beverages with a beer-like flavor. Beer-taste beverages include not only alcoholic beverages such as beer, low-malt beer and beer-taste sparkling liqueur, but also non-alcoholic beer-taste beverages. As referred to above, the term "non-alcoholic" refers to an alcohol content of less than 1%. The alcohol content of "non-alcoholic" beverages may be less than 0.01%.

Hereunder, the present invention will be more specifically described by way of examples, but this invention is not limited to these examples.

### EXAMPLES

### <Measurement of α-acids>

Measurement of α-acids was performed according to Method 7.7 as described in Analytica-EBC (published by EBC (European Brewery Convention)).

### <Measurement of linalool>

### (1) Measurement of linalool in a hop ingredient and extraction residues (solid)

For the purpose of quantitative analysis of fragrance (essential oil) components in a hop ingredient, the total content of essential oil components was quantified by steam distillation as described in *ASBC Methods of Analysis* (produced by ASBC (The American Society of Brewing Chemists)), and the resulting essential oil was subjected to quantitative analysis of fragrance components by GC-MS (TIC mode) under the following conditions.

### [GC-MS conditions]

Capillary column: DB-WAX, produced by J&W (length 60 m, internal diameter 0.25 mm, film thickness 0.5 µm)
Oven temperature: Raised from 40°C to 240°C at a rate of 6°C/min., and held for 20 min.
Carrier gas: He
Gas flow rate: 1.5 mL/min
Transfer line temperature: 240°C
MS ion source temperature: 230°C
MS quadrupole temperature: 150°C
Front inlet temperature: 240°C.

### (2) Measurement of linalool in an extract (liquid)

The obtained extract was diluted with ethanol at a concentration of 5 mg/mL, and the ethanol solution was diluted 300-fold with dichloromethane and subjected to quantitative analysis of fragrance components by GC-MS (TIC mode) under the following conditions.

### [GC-MS conditions]

Capillary column: DB-WAX, produced by J&W (length 60 m, internal diameter 0.25 mm, film thickness 0.5 µm)
Oven temperature: Raised from 40°C to 240°C at a rate of 6°C/min., and held for 20 min.
Carrier gas: He
Gas flow rate: 1.5 mL/min
Transfer line temperature: 240°C
MS ion source temperature: 230°C
MS quadrupole temperature: 150°C
Front inlet temperature: 240°C.

### Example 1, not according to the invention

As hop ingredients, there were provided hop pellets of the Tradition and Nugget varieties having a relatively high linalool concentration. 165 g of the hop pellets of each variety were charged into an extraction tank, where the pellets were subjected to extraction with carbon dioxide in a supercritical state under the conditions that the pressure and temperature of carbon dioxide in the extraction tank be set to 9 MPa and 50°C, respectively. Then, a hop extract was separated from carbon dioxide under the condition that the temperature of a separation tank be set to each of the following values: -10°C, 10°C, 30°C, 40°C and 50°C. The extraction was performed by a single-pass method. Table 1 shows the concentrations of linalool and α-acids present in each of the two varieties of hop pellets used as ingredients and in each of the different extracts obtained therefrom. Table 2 shows the ratios of the amount of linalool (in mg) to that of α-acids (in g) ("linalool/a-acids ratio") in each of the different varieties of hop pellets and in each of the different extracts obtained therefrom. Table 3 shows the recovery rates of linalool and α-acids in each of the different extracts obtained.

**[Table 1]**

| Single-pass extraction pressure 9 MPa | Linalool concentration (mg/100 g) | | | | | | α-acid concentration (g/100 g) | | | | | |
|---|---|---|---|---|---|---|---|---|---|---|---|---|
| | Ingredient | Separation tank temp. | | | | | Ingredient | Separation tank temp. | | | | |
| | | -10°C | 10°C | 30°C | 40°C | 50°C | | -10°C | 10°C | 30°C | 40°C | 50°C |
| Nugget | 13.2 | 446.7 | 475.4 | 441.3 | 429.0 | 333.7 | 11.3 | 8.1 | 10.8 | 12.1 | 14.0 | 16.1 |
| Tradition | 8.2 | 329.5 | 321.1 | 291.4 | 188.0 | 207.8 | 5.5 | 7.1 | 8.7 | 8.2 | 14.1 | 16.1 |

**[Table 2]**

| Single-pass extraction pressure 9 MPa | Linalool/α-acids ratio in ingredient | Linalool/α-acids ratio in extract | | | | |
|---|---|---|---|---|---|---|
| | | Separation tank temp. | | | | |
| | | -10°C | 10°C | 30°C | 40°C | 50°C |
| Nugget | 1.2 | 54.9 | 44.1 | 36.5 | 30.7 | 20.8 |
| Tradition | 1.5 | 46.1 | 36.9 | 35.4 | 13.3 | 12.9 |

**[Table 3]**

| Single-pass extraction pressure 9 MPa | Linalool recovery rate (%) | | | | | | α-acid recovery rate (%) | | | | | |
|---|---|---|---|---|---|---|---|---|---|---|---|---|
| | Ingredient | Separation tank temp. | | | | | Ingredient | Separation tank temp. | | | | |
| | | -10°C | 10°C | 30°C | 40°C | 50°C | | -10°C | 10°C | 30°C | 40°C | 50°C |
| Nugget | 100 | 100 | 93 | 68 | 65 | 42 | 100 | 2.3 | 2.5 | 2.2 | 2.5 | 2.4 |
| Tradition | 100 | 73 | 58 | 42 | 23 | 30 | 100 | 2.4 | 2.3 | 1.8 | 2.6 | 3.4 |

The results given above reveal that when hops of a variety with a relatively high linalool concentration are treated under the condition that the temperature of a separation tank be set to a low temperature of not higher than 30°C, the recovery rate of linalool can be increased, so that the ratio of the amount of linalool (in mg) to that of α-acids (in g) ("linalool/a-acids ratio") can be ensured to be not lower than 31.0.

### <Example 2>

There were provided hop pellets of the Tradition variety as a hop ingredient. 50 kg of the hop pellets were charged into an extraction tank, where the pellets were subjected to extraction with carbon dioxide in a supercritical state under the conditions that the pressure and temperature of carbon dioxide in the extraction tank be set to 9 MPa and 50°C, respectively. Then, a hop extract was separated from carbon dioxide under the condition that the temperature of a separation tank be set to each of the following values: 10°C, 20°C, 35°C and 50°C. The extraction was performed by a circulation method. According to the invention, the temperature of the separation tank is adjusted to not higher than 20 °C. Table 4 shows the concentrations of linalool and α-acids present in the hop pellets used as an ingredient and in each of the different extracts obtained therefrom. Table 5 shows the ratios of the amount of linalool (in mg) to that of α-acids (in g) ("linalool/a-acids ratio") in the hop pellets and in each of the different extracts obtained. Table 6 shows the recovery rates of linalool and α-acids in each of the different extracts obtained.

**[Table 4]**

| Circulation extraction pressure 9 MPa | Linalool concentration (mg/100 g) | | | | | α-acid concentration (g/100 g) | | | | |
|---|---|---|---|---|---|---|---|---|---|---|
| | Ingredient | Separation tank temp. | | | | Ingredient | Separation tank temp. | | | |
| | | 10°C | 20°C | 35°C | 50°C | | 10°C | 20°C | 35°C | 50°C |
| Tradition | 6.1 | 1008.2 | 990.3 | 308.2 | 243.2 | 4.0 | 4.8 | 5.0 | 18.0 | 17.4 |

**[Table 5]**

| Circulation extraction pressure 9 MPa | Linalool/α-acids ratio in ingredient | Linalool/α-acids ratio in extract | | | |
|---|---|---|---|---|---|
| | | Separation tank temp. | | | |
| | | 10°C | 20°C | 35°C | 50°C |
| Tradition | 1.5 | 210.0 | 198.1 | 17.1 | 14.0 |

**[Table 6]**

| Circulation extraction pressure 9 MPa | Linalool recovery rate (%) | | | | | α-acid recovery rate (%) | | | | |
|---|---|---|---|---|---|---|---|---|---|---|
| | Ingredient | Separation tank temp. | | | | Ingredient | Separation tank temp. | | | |
| | | 10°C | 20°C | 35°C | 50°C | | 10°C | 20°C | 35°C | 50°C |
| Tradition | 100 | 85 | 88 | 8 | 1 | 100 | 0.6 | 0.7 | 0.7 | 0.2 |

The results given above reveal that even when extraction was performed by a circulation method under the condition that the temperature of a separation tank be set to not higher than 30°C, the recovery rate of linalool can be significantly increased, and in particular, the ratio of the amount of linalool (in mg) to that of α-acids (in g) ("linalool/α-acids ratio") can be significantly increased. Also, it is found, by comparison with the results obtained in Example 1, that extraction by a circulation method results in a higher recovery rate of linalool and a higher linalool/α-acids ratio than extraction by a single-pass method.

### Example 3, not according to the invention

As a hop ingredient, there were provided hop pellets of the Saaz variety having a relatively low linalool concentration. 165 g of the hop pellets were charged into an extraction tank, where the pellets were subjected to extraction with carbon dioxide in a supercritical state under the conditions that the pressure and temperature of carbon dioxide in the extraction tank be set to 9 MPa and 50°C, respectively. Then, a hop extract was separated from carbon dioxide under the condition that the temperature of a separation tank be set to each of the following values: -10°C, 10°C, 30°C, 40°C and 50°C. The extraction was performed by a single-pass method. Table 7 shows the concentrations of linalool and α-acids present in the hop pellets used as an ingredient and in each of the different extracts obtained therefrom. Table 8 shows the ratios of the amount of linalool (in mg) to that of α-acids (in g) ("linalool/a-acids ratio") in the hop pellets and in each of the different extracts obtained. Table 9 shows the recovery rates of linalool and α-acids in each of the different extracts obtained.

**[Table 7]**

| Single-pass extraction pressure 9 MPa | Linalool concentration (mg/100 g) | | | | | | α-acid concentration (g/100 g) | | | | | |
|---|---|---|---|---|---|---|---|---|---|---|---|---|
| | Ingredient | Separation tank temp. | | | | | Ingredient | Separation tank temp. | | | | |
| | | -10°C | 10°C | 30°C | 40°C | 50°C | | -10°C | 10°C | 30°C | 40°C | 50°C |
| Saaz | 1.3 | 47.7 | 50.1 | 41.4 | 32.0 | 33.2 | 2.0 | 6.6 | 8.6 | 11.2 | 9.4 | 14.3 |

**[Table 8]**

| Single-pass extraction pressure 9 MPa | Linalool/α-acids ratio in ingredient | Linalool/α-acids ratio in extract | | | | |
|---|---|---|---|---|---|---|
| | | Separation tank temp. | | | | |
| | | -10°C | 10°C | 30°C | 40°C | 50°C |
| Saaz | 0.7 | 7.3 | 5.8 | 3.7 | 3.4 | 2.3 |

**[Table 9]**

| Single-pass extraction pressure 9 MPa | Linalool recovery rate (%) | | | | | | α-acid recovery rate (%) | | | | | |
|---|---|---|---|---|---|---|---|---|---|---|---|---|
| | Ingredient | Separation tank temp. | | | | | Ingredient | Separation tank temp. | | | | |
| | | -10°C | 10°C | 30°C | 40°C | 50°C | | -10°C | 10°C | 30°C | 40°C | 50°C |
| Saaz | 100 | 58 | 49 | 34 | 21 | 19 | 100 | 5.4 | 5.6 | 6.2 | 4.4 | 5.6 |

The results given above reveal that even when the hop pellets of the Saaz variety having a relatively low linalool concentration are treated under the condition that the temperature of a separation tank be set to not higher than 30°C, the recovery rate of linalool can be increased, so that the ratio of the amount of linalool (in mg) to that of α-acids (in g) ("linalool/a-acids ratio") can be ensured to be not lower than 3.7.

### <Reference Example>

There were provided hop pellets of the Tradition variety as a hop ingredient. 1500 g of the hop pellets were charged into an extraction tank, where the pellets were subjected to extraction with carbon dioxide in a supercritical state under the conditions that the pressure and temperature of carbon dioxide in the extraction tank be set to 30 MPa and 61°C, respectively. The extraction was performed by a circulation method. Then, a hop extract was separated from carbon dioxide under the condition that the temperature of a separation tank be set to each of 30°C and 50°C. Under the condition of separation tank temperature of 30°C, the operation was unable to be continued because of a significant increase in the viscosity of an extract flowing through the piping in the vicinity of the separation tank. Table 10 shows the concentrations of linalool and α-acids, and the ratios of the amount of linalool (in mg) to that of α-acids (in g) ("linalool/a-acids ratio"), in the hop pellets used as an ingredient and in the extract obtained at a separation tank temperature of 55°C. Table 11 shows the recovery rates of linalool and α-acids in the extract obtained.

**[Table 10]**

| Circulation extraction pressure 30 MPa | Linalool conc. (mg/100 g) | | | α-acid conc. (g/100g) | | | Linalool/α-acids ratio | | |
|---|---|---|---|---|---|---|---|---|---|
| | Ingredient | Separation tank temp. | | Ingredient | Separation tank temp. | | Ingredient | Separation tank temp. | |
| | | 30°C | 55°C | | 30°C | 55°C | | 30°C | 55°C |
| Tradition | 9.2 | Unable to contrinue opearation | 24.9 | 3.9 | Unable to contrinue opearation | 18.9 | 2.4 | Unable to contrinue opearation | 1.3 |

**[Table 11]**

| Circulation extraction pressure 30 MPa | Linalool recovery rate (%) | | | α-acid recovery rate (%) | | |
|---|---|---|---|---|---|---|
| | Ingredient | Separation tank temp. | | Ingredient | Separation tank temp. | |
| | | 30°C | 55°C | | 30°C | 55°C |
| Tradition | 100 | Unable to contrinue opearation | 31 | 100 | Unable to contrinue opearation | 56.0 |

The results given above reveal that when extraction is performed under the conditions that the extraction pressure and separation tank temperature be set to 30 MPa and 30°C, respectively, the operation cannot be continued because of a significant increase in the viscosity of an extract. It is also found that when the separation tank temperature is increased up to 55°C, the operation can be continued, but the recovery rate of linalool is only about 31% and that of α-acids becomes higher, thereby resulting in a relative decrease in linalool/α-acids ratio.

### <Beer production example>

One hundred litters of a wort to which bitterness had been imparted by adding hops according to a common procedure was boiled, and one minute before the completion of the boiling, 0.45 g of the particular hop extract obtained in Example 2 (Tradition variety, separation tank temperature 20°C) was added. Then, according to common procedures, the wort was allowed to rest in a whirlpool and cooled in open air to yield a cold wort. From this wort, beer was produced by following a common beer production procedure. For the purpose of comparison, another beer was produced by following the same procedure except that no hop extract was added.

The obtained two types of beers containing or not containing a hop extract were subjected to sensory evaluation of beer flavor. To be specific, six trained panelists specialized in beer were asked to determine which of the beers was more favorable. As a result, all the six panelists reported that the beer containing the hop extract of the present invention had a more favorable flavor. It was found that the beer containing the hop extract of this invention had a floral nose and a well-balanced beer flavor.

### <Production example of soft drink>

A soft drink was produced according to the formulation given below. The soft drink produced had a refreshing aroma derived from hops and a pleasant aftertaste.
Frozen concentrated lemon juice: 5.00 parts by mass
High-fructose corn syrup: 11.00 parts by mass
Citric acid: 0.20 parts by mass
L-ascorbic acid: 0.02 parts by mass
Flavorant: 0.20 parts by mass
Hop extract of Example 1 (Tradition variety, separation tank temperature 30°C): 0.0007 parts by mass
Pigment: 0.10 parts by mass
The total amount was adjusted with water to 100 parts by mass.

### <Production example of lactobacillus beverage>

A lactobacillus beverage was produced according to the formulation given below.
Fermented milk containing 21% milk solids: 14.76 parts by mass
High-fructose corn syrup: 13.31 parts by mass
Citric acid: 0.08 parts by mass
Pectin: 0.50 parts by mass
Flavorant: 0.15 parts by mass
Hop extract of Example 1 (Saaz variety, separation tank temperature 10°C): 0.0007 parts by mass
The total amount was adjusted with water to 100 parts by mass.

### <Production example of tea beverage>

A tea beverage was produced according to the formulation give above.
Tea extract: 2.0 parts by mass
Flavorant: 0.10 parts by mass
Hop extract of Example 1 (Nugget variety, separation tank temperature 30°C): 0.0007 parts by mass
The total amount was adjusted with water to 100 parts by mass.

### <Production example of powder for dissolution in use>

A powder for dissolution in use was produced according to the formulation give below.
Collagen peptide: 76.95 parts by mass
Elastin peptide: 0.02 parts by mass
Proteoglycan: 0.01 part by mass
Dextrin: 23.0 parts by mass
Hop extract of Example 1 (Nugget variety, separation tank temperature 10°C): 0.02 parts by mass.

### <Production example of tablet>

According to the formulation given below, all ingredients were mixed and molded into tablets.
Collagen peptide: 50.32 parts by mass
Crystalline cellulose: 29.5 parts by mass
Partially pregelatinized starch: 20.00 parts by mass
Magnesium stearate: 0.01 part by mass
Hop example of Example 2 (Tradition variety, separation tank temperature 20°C): 0.17 parts by mass.

## Claims

1. A method for producing a hop extract using supercritical carbon dioxide as an extraction solvent, the method comprising
bringing carbon dioxide in a supercritical state in contact with a hop ingredient, which has been charged in an extraction tank, thus obtaining carbon dioxide containing a hop extract, wherein the pressure of carbon dioxide in the extraction tank is adjusted to be in the range of 8 to 10 MPa,
directing the carbon dioxide containing the hop extract to a separation tank, and
reducing the pressure to separate the extract from the carbon dioxide, wherein
the temperature of the separation tank is adjusted to not higher than 20°C,
and recovering and circulating the separated carbon dioxide to the extraction tank.

2. The method according to claim 1, wherein the temperature of carbon dioxide in the extraction tank is adjusted to be in the range of 40 to 60°C.

3. The method according to claim 1 or 2, wherein the hop has a linalool concentration of not higher than 5.0 mg/100 g, and the hop extract has a ratio of the amount of linalool (in mg) to that of α-acids (in g), which is not lower than 3.7.

4. The method according to claim 1 or 2, wherein the hop ingredient has a linalool concentration of higher than 5.0 mg/100 g and lower than 10.0 mg/100 g, and the hop extract has a linalool concentration of not lower than 310.0 mg/100 g and a concentration of α-acids of not higher than 10.0 g/100 g.

5. The method according to claim 4, wherein the hop ingredient is of the Tradition or Citra variety.

6. The method according to claim 1 or 2, wherein the hop ingredient has a linalool concentration of not higher than 5.0 mg/100 g, and the hop extract has a linalool concentration of not lower than 40.0 mg/100 g and a concentration of α-acids of not higher than 12.0 g/100 g.

7. The method according to claim 3 or 6, wherein the hop ingredient is of the Saaz, Cascade or Simcoe variety.

8. The method according to any one of claims 1 to 7, wherein the amount of linalool in the extract is not lower than 33 mass% of that in the hop ingredient.

9. The method according to claim 8, wherein the amount of α-acids in the hop extract is not higher than 10 mass% of the amount of α-acids in the hop ingredient.

10. A hop extract having a ratio of the amount of linalool (in mg) to that of α-acids (in g), which is not lower than 31.0.

11. A method for producing a food or beverage, the method comprising adding a hop extract as obtained by the method according to any of claims 1 to 9 or the hop extract according to claim 10 .

12. The method according to claim 11, wherein the food or beverage is an effervescent beverage.

13. The method according to claim 12, wherein the effervescent beverage is a beer-taste beverage.

14. The method according to claim 12 or 13, wherein the effervescent beverage is an alcoholic beverage.

15. The method according to claim 13, wherein the effervescent beverage is a non-alcoholic beer-taste beverage.

## Patentansprüche

1. Ein Verfahren zur Herstellung eines Hopfenextrakts unter Verwendung von überkritischem Kohlendioxid als ein Extraktionslösungsmittel, wobei das Verfahren umfasst
Inkontaktbringen von Kohlendioxid in einem überkritischen Zustand mit einem Hopfeninhaltsstoff, der in einen Extraktionstank gefüllt worden ist, wodurch Kohlendioxid erhalten wird, das einen Hopfenextrakt enthält, wobei der Druck des Kohlendioxids im Extraktionstank so eingestellt wird, dass er im Bereich von 8 bis 10 MPa liegt,
Leiten des Kohlendioxids, das den Hopfenextrakt enthält, in einen Trenntank und Verringern des Drucks zum Abtrennen des Extrakts vom Kohlendioxid, wobei die Temperatur des Trenntanks auf nicht mehr als 20°C eingestellt wird,
und Rückgewinnen und Umwälzen des abgetrennten Kohlendioxids in den Extraktionstank.

2. Das Verfahren nach Anspruch 1, wobei die Temperatur des Kohlendioxids im Extraktionstank so eingestellt wird, dass sie im Bereich von 40 bis 60°C liegt.

3. Das Verfahren nach Anspruch 1 oder 2, wobei der Hopfen eine Linaloolkonzentration von nicht mehr als 5,0 mg/100 g aufweist und der Hopfenextrakt ein Verhältnis der Menge an Linalool (in mg) zu der an α-Säuren (in g) aufweist, das nicht weniger als 3,7 ist.

4. Das Verfahren nach Anspruch 1 oder 2, wobei der Hopfenbestandteil eine Linaloolkonzentration von höher als 5,0 mg/100 g und niedriger als 10,0 mg/100 g aufweist und der Hopfenextrakt eine Linaloolkonzentration von nicht niedriger als 310,0 mg/100 g und eine Konzentration an α-Säuren von nicht höher als 10,0 g/100 g aufweist.

5. Das Verfahren nach Anspruch 4, wobei der Hopfenbestandteil aus der Sorte Tradition oder Citra ist.

6. Das Verfahren nach Anspruch 1 oder 2, wobei der Hopfenbestandteil eine Linaloolkonzentration von nicht höher als 5,0 mg/100 g und der Hopfenextrakt eine Linaloolkonzentration von nicht niedriger als 40,0 mg/100 g und eine Konzentration an α-Säuren von nicht höher als 12,0 g/100 g aufweist.

7. Das Verfahren nach Anspruch 3 oder 6, wobei der Hopfenbestandteil von der Sorte Saaz, Cascade oder Simcoe ist.

8. Das Verfahren nach einem der Ansprüche 1 bis 7, wobei die Menge an Linalool im Extrakt nicht weniger als 33 Massen-% der Menge im Hopfenbestandteil beträgt.

9. Das Verfahren nach Anspruch 8, wobei die Menge an α-Säuren im Hopfenextrakt nicht größer als 10 Massen-% der Menge an α-Säuren im Hopfenbestandteil ist.

10. Ein Hopfenextrakt mit einem Verhältnis der Menge an Linalool (in mg) zu der an α-Säuren (in g), das nicht weniger als 31,0 ist.

11. Ein Verfahren zur Herstellung eines Lebensmittels oder Getränks, wobei das Verfahren die Zugabe eines Hopfenextrakts, wie er durch das Verfahren nach einem der Ansprüche 1 bis 9 erhalten wird, oder des Hopfenextrakts nach Anspruch 10 umfasst.

12. Das Verfahren nach Anspruch 11, wobei das Lebensmittel oder Getränk ein sprudelndes Getränk ist.

13. Das Verfahren nach Anspruch 12, wobei das sprudelnde Getränk ein Getränk mit Biergeschmack ist.

14. Das Verfahren nach Anspruch 12 oder 13, wobei das sprudelnde Getränk ein alkoholisches Getränk ist.

15. Das Verfahren nach Anspruch 13, wobei das sprudelnde Getränk ein alkoholfreies Getränk mit Biergeschmack ist.

## Revendications

1. Méthode de production d'un extrait de houblon en utilisant du dioxyde de carbone supercritique comme solvant d'extraction, ladite méthode comprenant :
l'apport du dioxyde de carbone dans un état supercritique au contact d'un ingrédient de houblon, qui a été chargé dans un réservoir d'extraction, ce qui permet ainsi d'obtenir du dioxyde de carbone contenant un extrait de houblon, dans laquelle la pression du dioxyde de carbone dans le réservoir d'extraction est ajustée pour être comprise dans la plage de 8 à 10 MPa,
la conduite du dioxyde de carbone contenant l'extrait de houblon dans un réservoir de séparation, et
la réduction de la pression pour séparer l'extrait du dioxyde de carbone, où la température du réservoir de séparation est ajustée à pas plus de 20°C,
et la récupération et la circulation du dioxyde de carbone séparé vers le réservoir d'extraction.

2. Méthode selon la revendication 1, dans laquelle la température du dioxyde de carbone dans le réservoir d'extraction est ajustée pour être comprise dans la plage de 40 à 60°C.

3. Méthode selon la revendication 1 ou 2, dans laquelle le houblon a une concentration en linalool qui n'est pas supérieure à 5,0 mg/100 g, et l'extrait de houblon possède un rapport de quantité du linalool (en mg) sur celle des alpha-acides (en g) qui n'est pas inférieur à 3,7.

4. Méthode selon la revendication 1 ou 2, dans laquelle l'ingrédient de houblon a une concentration en linalool supérieure à 5,0 mg/100 g et inférieure à 10,0 mg/100 g, et l'extrait de houblon a une concentration en linalool qui n'est pas inférieure à 310,0 mg/100 g et une concentration en alpha-acides qui n'est pas supérieure à 10,0 g/100 g.

5. Méthode selon la revendication 4, dans laquelle l'ingrédient de houblon est de la variété Tradition ou Citra.

6. Méthode selon la revendication 1 ou 2, dans laquelle l'ingrédient de houblon a une concentration en linalool qui n'est pas supérieure à 5,0 mg/100 g, et l'extrait de houblon a une concentration en linalool qui n'est pas inférieure à 40,0 mg/100 g et une concentration en alpha-acides qui n'est pas supérieure à 12,0 g/100 g.

7. Méthode selon la revendication 3 ou 6, dans laquelle l'ingrédient de houblon est de la variété Saaz, Cascade ou Simcoe.

8. Méthode selon l'une quelconque des revendications 1 à 7, dans laquelle la quantité de linalool dans l'extrait n'est pas inférieure à 33 % en masse de celle dans l'ingrédient de houblon.

9. Méthode selon la revendication 8, dans laquelle la quantité d'alpha-acides dans l'extrait de houblon n'est pas supérieure à 10 % en masse de la quantité des alpha-acides dans l'ingrédient de houblon.

10. Extrait de houblon ayant un rapport de la quantité de linalool (en mg) sur celle des alpha-acides (en g) qui n'est pas inférieure à 31,0.

11. Méthode de production d'un aliment ou d'une boisson, ladite méthode comprenant l'addition d'un extrait de houblon tel qu'obtenu par la méthode selon l'une quelconque des revendications 1 à 9 ou l'extrait de houblon selon la revendication 10.

12. Méthode selon la revendication 11, dans laquelle l'aliment ou la boisson est une boisson effervescente.

13. Méthode selon la revendication 12, dans laquelle la boisson effervescente est une boisson ayant un goût de bière.

14. Méthode selon la revendication 12 ou 13, dans laquelle la boisson effervescente est une boisson alcoolisée.

15. Méthode selon la revendication 13, dans laquelle la boisson effervescente est une boisson non alcoolisée ayant un goût de bière.
